# EUROPEAN PATENT SPECIFICATION

(11) **EP 3 184 298 B1**
(45) Date of publication and mention of the grant of the patent: **01.07.2026**
(21) Application number: 16205196.5
(22) Date of filing: 20.12.2016
(51) Int. Cl.: B32B 7/06, B32B 7/12, B32B 27/18, B32B 27/32, B32B 27/08

(54) **A SHRINKABLE FACE FILM AND A LABEL COMPRISING A SHRINKABLE FACE FILM**
FOLIE MIT SCHRUMPFFÄHIGER SEITE UND ETIKETT MIT EINER FOLIE MIT SCHRUMPFFÄHIGER SEITE
FILM À FACE THERMORÉTRACTABLE ET ÉTIQUETTE COMPRENANT UN FILM À FACE THERMORÉTRACTABLE

(30) Priority: 21.12.2015 US 201514975925
(43) Date of publication of application: 28.06.2017
(73) Proprietor: UPM Raflatac Oy, 33310 Tampere (FI)
(72) Inventor: MITCHELL, Noel, 42111 Wuppertal (DE); MAJEWSKA, Klaudia, 55-040 Bielany Wroclawskie (PL)
(74) Representative: Berggren Oy

(56) References cited:
- EP-A1- 1 632 343
- WO-A1-2010/047906
- WO-A1-2015/004314
- WO-A1-2015/118212
- US-A1- 2011 268 979

## Description

### Technical field

The application relates to a face film for a label. Especially to a heat shrink face film for labelling applications.

### Background

It is general practice to apply a label to a surface of an item to provide decoration, and/or to display information about the product being sold, such as the content of the item, a trade name or logo. In addition to pressure-sensitive, wet glue and wrap around labels other labelling technologies are available, for example shrink sleeves. Shrink sleeves may be provided by forming a tube of plastic film, which may be dropped over an item to be labelled and subsequently fed the item through a shrink-tunnel at elevated temperature causing the film to shrink and fit the shape of the item. Shrink films are known from EP 1 632 343 A1 or WO 2010/047906 A1.

### Summary

It is an aim of the embodiments to provide a shrinkable face film for a label capable to shrink under exposure to external energy, according to claim 1, and a shrinkable label suitable for labelling of an item, according to claim 5. Further it is an aim to provide the use of said label according to claim 6, combination of an item and a shrinkable label, wherein the label is shrunk around the item, according to claim 7 and a method for labelling according to claim 8.

Further embodiments of the application are presented in the dependent claims.

According to the present invention, the core layer comprises between 50 and 80 wt.% of the propylene random copolymer(s); and between 20 and 50 wt.% of propylene-ethylene plastomer, ethylene-octene elastomer, ethylene-butene elastomer or any combination thereof.

In a reference example the core layer comprises between 50 and 80 wt.% of the propylene random copolymer(s); and between 20 and 50 wt.% of the olefin block copolymer(s) of ethylene and octene.

The cyclic polymer(s) of the skin layer(s) include a first cyclic olefin copolymer and a second cyclic olefin copolymer exhibiting different glass transition temperatures between 30 and 100 °C, and wherein a difference between the glass transition temperature of the first cyclic olefin copolymer and the glass transition temperature of the second cyclic olefin copolymer is between 5 and 60 °C.

In an example the first cyclic polymer is cyclic olefin copolymer exhibiting the glass transition temperature below 70°C and wherein the second cyclic polymer is cyclic olefin copolymer exhibiting the glass transition temperature above 70°C.

In an example the multilayer face film is stretched in one direction with a ratio of unstretched film thickness to stretched film thickness between 2 and 10 so as to provide the multilayer face film comprising an orientation ratio between 2 and 10.

In an example the multilayer face film stretched in the one direction exhibits uniaxial stretching in a machine direction.

### Brief description of the drawings

In the following some examples and embodiments of the invention will be described in more detail with reference to appended drawings, in which
- Fig. 1: shows, in a perspective view, an example embodiment of a multilayer face film of a label,
- Fig. 2: shows, in a cross sectional view, an example embodiment of a multilayer face film for a label,
- Fig. 3: shows, in a perspective view, an example embodiment of a multilayer face film for a label,
- Fig. 4: shows, in a perspective view, an example embodiment of a heat shrinking of a plastic film,
- Fig. 5: shows an example embodiment of a label around an item,
- Fig. 6: shows an example embodiment of a label shrunk and fitted on a surface of an item i.e. a labelled item,
- Fig. 7: shows another example embodiment of a label around an item and fitted on a surface of an item i.e. a labelled item,
- Fig. 8: shows another example embodiment of a label around an item and fitted on a surface of an item i.e. labelled item,
- Fig. 9: shows a process for providing a shrink sleeve label and labeling of an article.

### Detailed description

In this description and claims, the percentage values relating to an amount of raw materials are percentages by weight (wt.%) unless otherwise indicated. Word "comprising" may be used as an open term, but it also comprises the closed term "consisting of". Unit of thickness expressed as microns corresponds to µm. The following reference numbers and denotations are used in this application:
- Sx, Sy, Sz: 3D coordinates,
- TD: transverse direction,
- CD: cross direction,
- MD: machine direction,
- DIR1: direction,
- DR: draw ratio (stretching ratio),
- MRK1: graphics (printing, print layer),
- L1: length of a label film prior to shrinking,
- w1: width of a label film prior to shrinking,
- d1: thickness of a label film prior to shrinking,
- L2: length of a shrunk label film,
- w2: width of a shrunk label film,
- d2: thickness of a shrunk label film,

- 1: a label film (a face film),
- 2: a label,
- 3: a first layer (a first skin layer or front surface layer),
- 4: a shrunk label,
- 5: a second layer ( a core or an intermediate layer),
- 6: a shrunk label film,
- 7: a third layer (a second skin layer or back surface layer),
- 8: an item,
- 9: a leading edge of a label,
- 10: a seam,
- 11: a trailing edge of a label,
- 12: a labelled item,
- 14: a neck of a bottle
- 22: a shrink sleeve label.

A term "label" refers to a piece of material, which is used for labelling of an item. Label may be used to identify something. Label may be attached to an item. In other words, label is suitable to be applied to a surface of an item to provide decoration, and/or to display information about the product being sold, such as content information, a trade name, a logo, a barcode, or any other graphics. The item may be also called as an article, or a substrate. Preferably, the label comprises a face film and at least some graphics on at least one surface of the face film. A face film may also be referred to as a label film. The graphics may comprise, for example, printed information and/or decoration. The graphics, such as printing or other type of visual coatings, may be applied on the face layer (either side) in a single process or via several successive steps. It is also possible that the visual coating include metallic foil or ink or similar.

Labels may be used in wide variety of labelling applications and end-use areas. For example in beverage labelling, food labelling, home and personal care product labelling, and labelling of industrial products. The surface of the labelled item may be plastic, rubber, glass, metal, ceramic, wood, fabric or paper based. The labelled item may be a container, such as a bottle. For example, polyethylene terephthalate (PET) bottle. Alternatively, the labelled item may be a bottle made of polypropylene (PP) or high density polyethylene (HDPE). Or it could be a glass container a metal container. It could also be any other rigid or solid item or items to be combined together. For example in multi-packed containers or where you might want to pack multiple items together which are not necessarily containers as such, for example separate blocks.

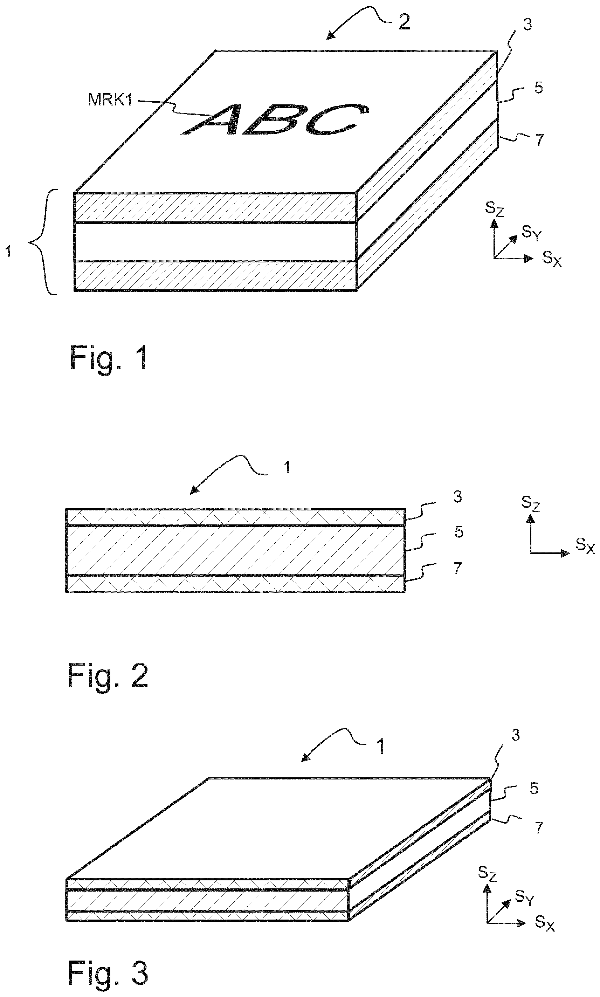

Referring to Fig. 1, a label 2 comprises a face film 1. At least one surface of the face film may comprise graphics MRK1. The face film may comprise or consist of a multilayer plastic film structure comprising e.g. three layers. In addition, the label may comprise adhesive. The adhesive may be used to enable the label to be attached to an item. Alternatively or in addition the adhesive may be used in a joint area of cylindrical label, wherein the opposite edges of the face film are overlapping. For example, the adhesive may be applied between the overlapping edges. In other words, "label" refers to an object having length, width and thickness. The object may be a plastic film or it may be derived from a plastic film. A label comprises a first surface portion. The first surface portion is intended to be attached to a second surface portion different from the first surface portion. The second surface portion may be a surface portion of the label different from the first surface portion, or a surface portion of another object. The first and second surface portions may be adjoined to each other by various means, such as by using an adhesive or heat, for example by welding.

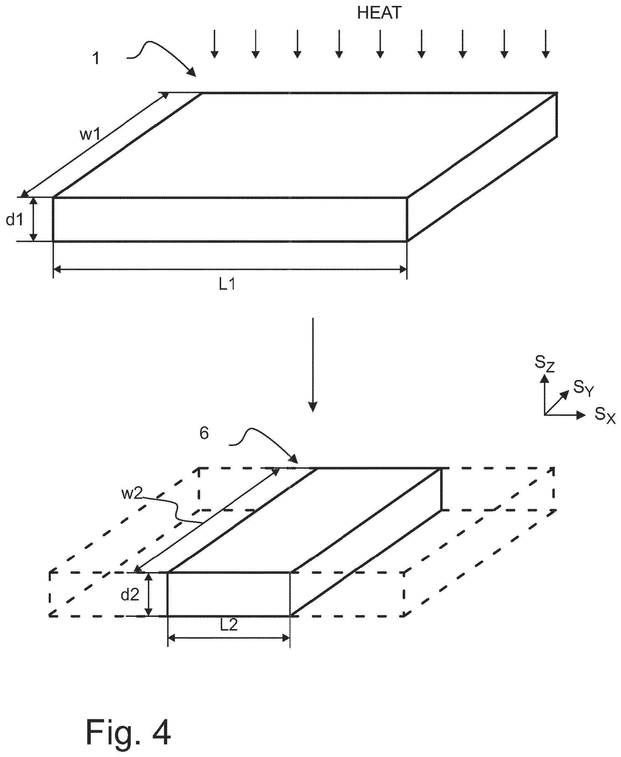

Term "shrinkable" refers to a property of a label film or a label made thereof to shrink under exposure to external energy. Shrinkable film is extruded and stretched (hot drawn) during manufacture and it remains its state after cooling down i.e. internal stresses provided during stretching are locked into the film. When this film is again brought up to the elevated temperature at which the stress was induced and then fixed during its manufacture, this stress is released and the film shrinks back. Depending on the treatment applied, the film can be shrinkable both lengthwise and crosswise (film is called biaxially oriented), or mainly shrinkable in one direction (film is called uniaxially oriented). Referring to Fig. 4, a heat shrinkable plastic film, such as a face film 1 of a label, may shrink when exposure to an elevated temperature. Heat may be applied via hot air. Alternatively, heat may be applied via infra-red radiation (IR) or steam. In response to application of heat, the shrinkable label film or a label comprising said film is able to shrink. The heat shrinkable film is able to shrink in the stretching (orientation) direction of the film. Film shrinkage may be focused on a local area or to the whole label film area. Due to the shrinking effect, in addition to carrying printed information, the shrunk label may also provide certain amount of additional structural support to the labelled items, for example, to a thin walled plastic bottle. Further, the label material may also provide certain tactile feeling for the end user in addition to the purely visual effects.

"Heat shrink film" or "heat shrink label" refers to a film or a label having at least 15% preferably at least 25% or at least 35% shrinkage between temperature of 65 and 98°C. Below 65°C shrinkage is less than 10%, preferably less than 5%, for example between 0 and 10%, or between 0.5 and 5%. A heat shrink label comprises or consists of a heat shrink film and is suitable to be fitted around an article to be labelled and shrunk around the article. In addition, a heat shrink label may comprise at least some graphics on a surface of the heat shrink film. A heat shrink label may be a heat shrink sleeve label (HS) or a roll-fed shrink film label (RFS). A heat shrink film without additional graphics, such as printing, may be used, for example, as a shrinking seal label, a tamper evident label or security label.

Term "machine direction" MD refers to the running direction Sₓ of the plastic film or continuous label web during label manufacturing. "Transverse direction" TD or "cross direction" CD refers to the direction S_{y} perpendicular to the running direction Sₓ of the film or label web. Directions are shown, for example, in Figures 1 and 3.

A ratio of total film thickness before and after stretching is called a "stretch ratio" or "stretching ratio" (DR). It may also be referred to as an orientation ratio. Stretch ratio is a non-oriented (undrawn) film thickness in relation to the oriented (drawn) film thickness. The non-oriented film thickness is the thickness after extrusion and subsequent chilling of the film. When stretching the film, the thickness of the film may diminish in the same ratio as the film stretches or elongates. For example, a film having thickness of 100 micrometres before uniaxial orientation is stretched by a stretch ratio of 5. After the uniaxial orientation the film may have a fivefold diminished thickness of 20 micrometres. Thus, the stretch ratio (orientation ratio) is 5. Oriented film, such as oriented face layer, may be provided, for example, by uniaxial or biaxial stretching.

Term "haze" refers to a property used to describe transparency of a plastic film or a face stock of label consisting of the plastic film. Haze relates to scattering of light by a film that results in a cloudy appearance of the film. Haze corresponds to the percentage of light transmitted through a film that is deflected from the direction of the incoming light. Haze may be measured according to standard ASTM D1003.

Term "roll-fed shrink film" (RFS) refers to labelling process, where a ready cut label is rolled over a container and then the label is shrunk in order to conform shape and size of the container. Label is supplied from a reel, cut into individual labels and applied around an item. Adhesive (e.g. hot melt adhesive) is used to hold the label on the surface of the item. The adhesive may be applied on the label or on the container in an area between the leading edge and the surface of the container. The adhesive may also be applied between trailing and leading edges of the label. When rolled over to an item, the trailing and leading edges may overlap and form a seam. Subsequent shrinking process at high temperatures enables tight fitting of the label around the item. Heat shrinking may occur at a shrink tunnel, where for example hot air may be blown towards passing items. The described process may be called as on-line labelling process. Roll-fed shrink films may be uniaxially oriented in machine direction (MD). Alternatively, films may be uniaxially oriented in transverse direction. When a label consists of a MDO shrink film as a face stock, and the machine direction of the label extends circumferentially around the item, the label is arranged to shrink primarily in the orientation direction when heated.

Term "shrink-sleeve" or "heat shrinkable sleeve film" (HS) refers to a labelling process, where a preformed label tube (or sleeve) is introduced around an item. Shrink sleeve label comprises or consists of transverse direction oriented (TDO) shrink film. The film is solvent seamed into a continuous tube label around the axis extending to the machine direction (Sₓ). The formed continuous tube (or sleeve) is cut into predetermined lengths and supplied as a form of individual tube label around an item. The item or container may be warmed before a cylindrical tube label is introduced over it. Tube around an item is heated in order to shrink the tube label around the item. The transverse direction orientation of the tube label extends circumferentially around the item. Thus, label primarily shrink in the transverse direction.

Term "printable surface" refers to a surface, such as a surface of a face layer, that is suitable for printing. Printable surface is also able to maintain the printing, such as printed text and/or graphics. Printable surface has sufficiently high surface energy. A low surface energy may lead to poor retaining capability of printing ink applied to the surface. For example, a face layer may have a surface energy at least 36 dynes/cm, preferably at least 38 dynes/cm, or at least 44 dynes/cm measured according to the standard ASTM D-2578. The surface tension may be between 36 and 60 dynes/cm, preferably between 38 and 56 dynes/cm, or between 44 and 50 dynes/cm. The surface tension level may also be maintained higher than or equal to 38 dynes/cm after 50 or 120 days. According to an embodiment, a printable heat shrinkable face layer and a label produced thereof comprises at least one printable face layer. Surface of the face film may be printable as such. Alternatively, surface of the face film may be treated prior to printing e.g. by corona unit at a printing line. For example, face film may have lower surface energy than 36 dynes/cm, but the surface is suitable for surface treatment increasing the energy prior to printing.

Overlying/underlying refers to an arrangement of a layer in relation to another layer. Overlaying/underlying refers to an arrangement, where a layer partially or completely overlies/underlies another layer. The overlying/underlying layers are not necessarily in contact with each other, but one or more additional layers may be arranged between the overlying layers.

Adjacent refers to an arrangement, where a layer is next to another layer. Adjacent layers are in contact with each other and no additional layers are between the layers.

Topmost (outermost, uppermost, upmost) layer refers to a configuration of a label structure, where the topmost layer forms upper part of the label structure arranged opposite to the surface attaching the surface of an item when labelled. Topmost layer of a label may be, for example, a skin layer, a print layer, a top coating (over-vanishing layer).

Undermost layer refers to a surface forming bottom part of the label structure arranged opposite to the topmost surface. Undermost layer is in contact with the surface of an article when labelled. In a shrink label the undermost and topmost layers of the label structure may contact each other in a seam area where the edges of the face film are overlapping. In an example, in the seam area edges of the face film are overlapping and a first skin layer and a second skin layer are adjacent to each other. Seam is formed when the adjacent layers are bonded together. Undermost layer of a label may be, for example a skin layer, a print layer, a top coating (over-vanishing layer).

### STRUCTURES OF SHRINK FILMS AND SHRINK LABELS PRODUCED THEREOF

Shrinkable labels, also referred to as shrink labels, are shrinking under exposure to external energy, such as elevated temperature. Shrinkable labels include both shrink sleeve labels and roll-fed shrink film labels. The shrinkable label may also be one of the following: tamper evident label, security label and shrinking seal label. Shrinkable labels comprise or consist of an oriented non-annealed face film.

A shrink label comprises or consists of an oriented and non-annealed face film, which is therefore shrinkable in the orientation direction. The face film may be oriented (stretched) in one direction. The film may be stretched in a machine direction. Alternatively, the film may be stretched in a transverse direction The resulting film is thus monoaxially (uniaxially) oriented (MO). Monoaxially oriented film may be machine oriented (MDO) or transverse oriented (TDO) in accordance to the direction of the orientation (stretching).

During stretching the randomly oriented polymer chains of the extruded films are oriented in the direction of stretching (drawing). Orientation under uniaxial stress provides orientation of polymer chains of the plastic film in the direction of stress provided. In other words, the polymer chains are oriented at least partially in the direction of stretching (drawing). In this application, machine direction (MD) refers to the running direction (Sₓ) of the film during manufacturing, as shown for example in Fig. 2. The degree of orientation of the polymer chains depends on the stretching ratio of the film. In other words, the polymer chains in the film stretched with a higher stretch ratio are more oriented when compared to the films stretched with a lower stretch ratio. The orientation, like orientation direction and ratio, may have effect on properties of the film, and/or the label comprising the film. The stretching of the film and orientation of the polymer chains may be observed microscopically. Further, the orientation is detectable e.g. from the mechanical properties of the films, such as values of modulus and/or tensile strength.

The oriented and non-annealed face film is suitable for shrinking along the direction of orientation, during exposure to external energy. Preferably, uniaxially oriented film has shrinking less than 10% or less than 5% in other directions (non-shrinking directions) of the film, during exposure to external energy. Expansion of the uniaxially oriented film is less than 5% in other directions (non-shrinking directions) of the film. Such a non-annealed film has not been specifically temperature treated i.e. annealed to become a dimensionally stable, non-shrinking film.

In an example, a face film is mono-axially (uniaxially) oriented and non-annealed and therefore shrinkable in the direction of uniaxial orientation. For example, a face film of a shrink sleeve label is mono-axially oriented in transverse direction (TD). For example, a face film of a roll-fed shrink film label is mono-axially oriented in machine direction (MD).

The heat shrink label comprises a multilayer face film (label film) structure comprising the shrinkable plastic film layers according to claim 1, as described above. In addition, the shrink label comprises at least some graphics on a surface of the face film. In addition, the shrink label may comprise an adhesive. The adhesive may be applied in a joint area of cylindrical label, wherein the opposite edges of the face film are overlapping, so as to form a seam. For example, the adhesive may be applied between the overlapping edges. Alternatively, the seam may be provided by using solvent or hot bar.

Shrinkage of the heat shrink label may be focused on a local area or to the whole label area. Local shrinkage may be focused on required areas, for example on an edge area of a label. Whole label may be shrunk in a direction extending circumferentially around a container to conform to the outside (external) shape of the container. Local shrinkage may be focused on required areas, for example on an edge area of an article.

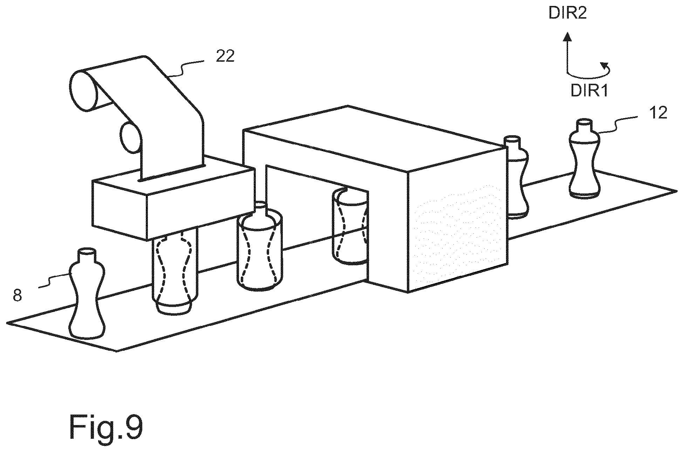

According to an embodiment, a shrink label is a shrink sleeve label. Referring to Fig. 9, the shrink sleeve label 22 is in a form of tubular sleeve comprising a face film 1 which is oriented uniaxially in a transverse direction (S_{Y}). Referring to Fig. 3 a shrink sleeve label is formed by seaming a first longitudinal edge and a second longitudinal edge of the face film 1 extending parallel to a machine direction of the face film (Sₓ). In other words, the face film is rolled around the axis extending in the machine direction (Sₓ) of the face film and the seam 10 is formed between the overlapping longitudinal edges of the face film 1. The seam extends perpendicular to the uniaxial orientation direction of the face film. In other words, TDO sleeve is formed off-line by forming a tube of the face film. Such a preformed sleeve tube may be further rolled into a roll and provided for separate labelling process. From this roll of preformed sleeve tube, desired lengths are cut for shrink sleeve labels, which are further transferred on the container to be labelled.

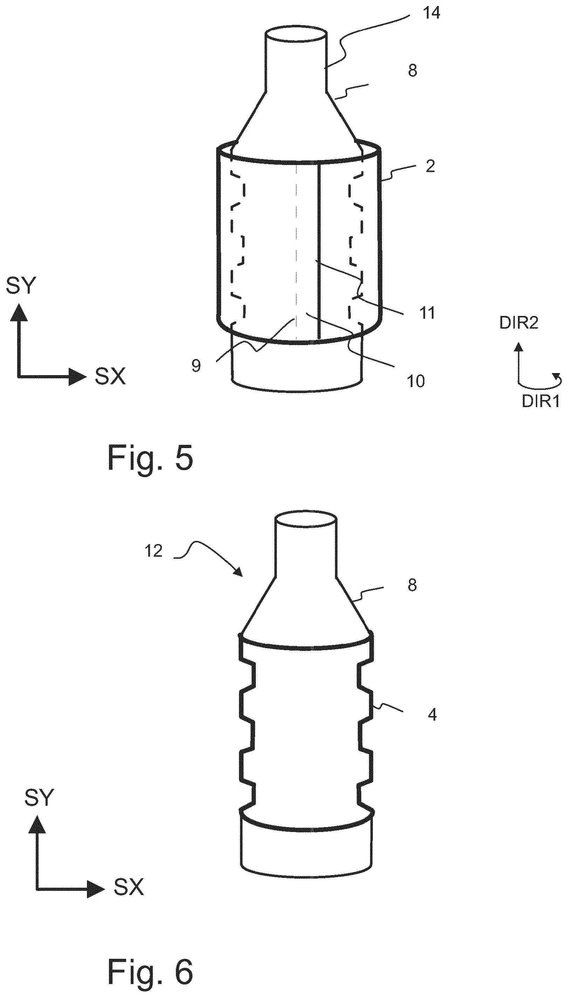

According to another embodiment, a shrink label is a roll-fed shrink film label comprising a face film 1 which is oriented uniaxially in a machine direction (Sₓ). Referring to Fig. 5 a roll fed shrink film label 2 is formed on-line around an article 8 to be labelled or around a mandrel by seaming a leading edge 9 and a trailing edge 11 of the face film. In other words, the face film is rolled around the axis extending in the transverse direction (S_{y}) of the face film. A label comprises a seam 10 between the overlapping leading edge 9 and trailing edge 11 of the face film. The seam extends in DIR 2, which is perpendicular to the uniaxial orientation direction Sₓ of the face film. If the label is formed around a mandrel it is further transferred to an article to be labelled. Again, typically the face film 1 has been provided its visual appearance and information during earlier converting steps. The shrink film label 2 is able to shrink in the direction DIR 1 during application of external energy, such as heat. Fig. 6 shows a shrunk label 4 around an item 8.

### Face film structure

Label films (face films) of a heat shrink label having a monolayer structure do not belong to this invention. The multilayer face film has at least a three layer structure. Alternatively, a multilayer face film may comprise five or even more layers. Preferably, a multilayer face film includes a core layer and equal number of skin layers on both sides of the core layer. For example, a five layer structure comprises a core layer and two skin layers on both sides of the core. For example, a multilayer structure may comprise tie-layers. It is also possible that a multilayer structure includes several core layers.

Referring to Fig. 1, a multilayer face film has a three layer structure. Three layer structure may comprise a first layer 3, a second layer 5 and a third layer 7. The second layer 5 is between the first 3 layer and the third 7 layer. In a three layer structure, the second layer 5 is an intermediate layer. The intermediate layer is also referred to as a core layer. The first layer 3 and the third layer 7 are also referred to as skin layers, i.e. a first skin layer and a second skin layer, respectively. The first skin layer and the second skin layer may also be referred to as a front surface layer and a back surface layer, respectively. The front surface layer may be an outermost layer of the multilayer structure when labelled to a surface of an item. However, the front surface may further be over coated. For example, in order to protect the printed graphics. The back surface layer may be the layer adjacent to a surface of an item.

Preferably a multilayer face film has a symmetric structure. For example, symmetric three layer face film comprises identical, or nearly identical skin layers on opposite sides of the core layer. Symmetric structure may have effect on quality of the shrunk face film and a shrunk label comprising said face film. For example, wrinkles and curling of the face film may be avoided.

Alternatively, a multilayer face film may be asymmetrical. For example, one skin layer may have more or less additives, e.g. anti-block or slip-agent, than the other skin layer. A face film structure may also comprise additional layers, such as tie layer(s) or protective layer(s). A multilayer face film may also have asymmetry with respect to the skin layer thickness. In other words, there might be some thickness difference between the skin layers, for example in a three layer structure comprising two skin layers the skin layers may have different thickness. The multilayer structure may be laminated or coextruded.

A core layer 5 may form major portion of the multilayer film structure. The core layer may be thicker than a first skin layer and a second skin layer. For example, the core may form 60 %, 70% or 80% of the total thickness of the multilayer structure. In an example, a three layer film has a construction 20%/60%/20% for first skin/core/second skin, respectively. In an example, a three layer film has a construction 15%/70%/15% for first skin/core/second skin, respectively. In an example, a three layer film has a construction 10%/80%/10% for first skin/core/second skin, respectively. Alternatively, the core may have thickness of 40 % of the total thickness of the multilayer film. In a three layer symmetric film, the core layer having thickness of 40 % of the total thickness of the film still forms major portion of the film, since the skin surfaces may have thickness of up to 30 % of the label thickness each. Thickness of the core layer may be from 15 to 50 microns, or from 20 to 50 microns, preferably around 30 or 25 microns. Thickness of the skin layers may be 40 % of the total thickness of the multilayer structure. Alternatively, thickness of the skin layers may be 60 % of the total thickness. A thickness of a skin layer may be less than 20 microns, preferably around 10 or 7.5 microns or less. An overall thickness of a multilayer film may be from 20 to 70 microns or from 25 to 60 microns, preferably around 50 microns, around 40 microns, or around 30 microns or less, for example 20 microns.

Preferably a multilayer film has uniform overall thickness. Uniform thickness refers to a homogeneous thickness of a film, wherein a thickness variation along the film is small. For example in a film area of 100mm*100mm variation of the film thickness is less than 10%, preferably between 0.1 and 5.0%. Uniform thickness of the film provides better quality labels, for example, labels having good visual appearance. Uniform film thickness may have effect on the register control and image quality of the printing.

### Face film compositions

The skin layer(s) of the multilayer face film have different composition when compared to the composition of the core layer. Also first and second skin layers may have different compositions. Alternatively, the first and second skin layers may have similar compositions.

According to an embodiment, a multilayer face film has a three layer structure comprising layers in the following order, a first skin layer, a core layer, and a second skin layer. The first skin layer may be a topmost layer of the label. The second skin may be an undermost layer of the label. At least one of the first skin layer and the second skin layer may comprise printing.

### Skin layers

In an example, a first skin layer and a second skin layer comprise predominantly cyclic olefin copolymer(s) (COC). Amount of cyclic olefin copolymer(s) in the skin layer(s) may be at least 50 wt.%, at least 60 wt.%, or at least 80 wt.%. Amount of cyclic olefin copolymer(s) may be up to 98 wt.%, or at most 95 wt.%, or at most 90 wt.%. For example, an amount of cyclic olefin copolymer(s) may be between 50 and 98%, or between 50 and 95 wt.%, or between 60 and 90 wt.%.

The first skin layer and the second skin layer comprises predominantly cyclic polymers. Cyclic polymers include cyclic olefin copolymer (COC), cyclic block copolymer (CBC) and cyclic olefin polymer (COP). Preferably, e.g. in a three layer face film structure, both a first skin layer and a second skin layer contain at least two of the following cyclic polymers: cyclic olefin copolymer, cyclic block copolymer, and cyclic olefin polymer. Cyclic olefin copolymers, cyclic block copolymers, and cyclic olefin polymers may have effect on clarity of the face film and a label produced thereof. Amount of cyclic polymers is at least 80 wt.%. Amount of cyclic polymers may be up to 98 wt.%, or at most 95 wt.%, or at most 90 wt.%. For example, an amount of cyclic polymers may be between 80 and 98%, or between 80 and 95 wt.%, or between 80 and 90 wt.%.

Cyclic olefin polymer may be produced by ring-opening metathesis polymerization of single type of cyclic monomers followed by hydrogenation. According to an example, melt index of a cyclic olefin polymer, also referred to as cyclo-olefin polymer, may be between 11 and 25 g/10 min at 230°C, for example between 15 and 25 g/10 min, or between 11 and 17 g/10 min. Light transmittance may be 90%.

Cyclic block copolymer is a polymer comprising two or more chemically distinct regions or segments, referred to as blocks. Blocks may be joined in a linear manner. Cyclic bloc copolymer may comprise blocks of hydrogenated polystyrene, polycyclohexylethylene (PCHE), and ethylene-butene (EB). Alternatively it may comprise blocks of polycyclohexylethylene (PCHE) and ethylene-propylene (EP). Specific gravity of cyclic block copolymer may be between 0.928 and 0.938 kg/dm³. Melt flow rate may be 3 g/10 min at 300 °C/1.2 kg, or 15 g/10 min at 280 °C/2.16 kg or 76 g/10 min at 250 °C/2.16 kg.

The cyclic olefin copolymer contains polymerized units derived from at least one cyclic and at least one acyclic olefin. COCs may be produced by chain copolymerization of cyclic monomers with ethene. The cyclic olefin may comprise at least 4 carbon atoms and a unsaturated site for coordinated polymerization with the acyclic olefin. The cyclic olefin may comprise an unsibstituted or substituted ring. The acyclic olefin may be an alpha olefin having two or more carbon atoms. Cyclic olefin copolymers may be based on cyclic monomers, such as norbornene and/or tetracyclododecene. Cyclic monomer(s) may be chain copolymerized with ethene (ethylene). For example, cyclic olefin copolymer may be comprise monomers of norbornene and ethene. Alternatively, cyclic olefin copolymer may comprise monomers of tetracyclododecene and ethene. Cyclic olefin copolymer may also consists of monomers of norbornene, tetracyclododecene and ethene. Alternatively, cyclic olefin monomer may be at least one of the following: cyclobutene, cyclopentene, cyclooctene, 5-methylnorbornene, 3-methylnorbornene, ethylnorbornene, phenylnorbomene, dimethylnorbornene, diethylnorbornene, dicyclopentadiene, methyltetracyclododecene, 6-methylnorbornene, 6-ethylnorbornene, 6-n-butylnorbornene, 5-propylnorbornene, 1-methylnorbornene, 7-methylnorbornene, 5,6-dimethylnorbornene, 5-phenylnorbornene, 5-benzylicnorbornene, 8-methyltetracyclo-3-dodecene, 8-ethyltetracyclo-3-dodecene, 8-hexyltetracyclo-3-dodecene, 2,10-dimethyltetracyclo-3-dodecene and 5,10-dimethyltetracyclo-3-dodecene.

In an example, the skin layer(s) comprise a first cyclic olefin polymer CP₁ and a second cyclic polymer CP₂. Cyclic polymer may be cyclic olefin copolymer (COC), cyclic block copolymer (CBC) or cyclic olefin polymer (COP). The first cyclic polymer and the second cyclic polymer exhibit different glass transition temperatures between 30 and 100 °C. The difference between the glass transition temperatures is between 5 and 60 °C.

According to the invention, the skin layers comprise a first cyclic olefin copolymer COC₁ and a second cyclic olefin copolymer COC₂. The first cyclic olefin copolymer and the second cyclic olefin copolymer exhibit different glass transition temperatures between 30 and 100 °C. The difference between the glass transition temperatures is between 5 and 60 °C. Cyclic olefin copolymers may have effect on clarity of the face film and a label produced thereof.

In an example, COC₂ has higher cyclic olefin monomer content (e.g. norbornene content) when compared to COC₁. Higher cyclic olefin monomer content may have effect on providing better resistance against solvents. It may further have effect on avoiding whitening of the film during seaming and heat shrinking. It may also have effect on enabling clear and flat seam for heat shrunk films and labels produced thereof. COC₁ may have effect on seam forming ability of the film.

In an example, the glass transition temperature of the first cyclic olefin copolymer is below 70°C and the glass transition temperature of the second cyclic olefin is above 70°C. For example, the first cyclic olefin copolymer COC₁ may have glass transition temperature of 65°C measured according to standard ISO 11357-1, -2,-3 with heating rate of 10°C/min. The second cyclic olefin copolymer may have a glass transition temperature of 78°C. Melt volume rate tested according to standard ISO 1133 at 230°C with test load of 2.16 kg of COC₁ may be 6.0 cm³/10min. Melt volume rate of COC₂ may be 11.0 cm³/10 min. Density of COC₁ and COC₂ may be 1010 kg/m³, when measured according to standard ISO 1183.

According to an example, skin layer(s) comprise cyclic olefin copolymer having density of 980 kg/m3, when measured according to standard ISO 1183. COC may have linear and amorphous structure. Melt volume rate may be 4 cm3/10 min, when measured according to standard ISO 1133 at 230°C with test load of 2.16 kg. Glass transition temperature may be 33 degrees C, when measured according to standard ISO 11357.

According to an example, skin layer(s) comprise cyclic olefin copolymer having density of 1.02 g/cm³, when measured according to standard ASTM D792. Melt volume rate may be 15 g/10 min, when measured according to standard ASTM D1238 at 260°C with test load of 2.16 kg. Glass transition temperature may be 70 degrees C.

According to an example, cyclic olefin copolymer may have melt flow rate 6.0 cm³/10min, when tested according to standard ISO 1133 at 230°C with test load of 2.16 kg. Density may be 1010 kg/m3, when measured according to standard ISO 1183. Glass transition temperature may be 65°C, when measured according to standard ISO 11357-1, -2,-3 with heating rate of 10°C/min.

According to an example, cyclic olefin copolymer may have melt flow rate 12 cm³/10min, when tested according to standard ISO 1133 at 230°C with test load of 2.16 kg. Density may be 1010 kg/m3, when measured according to standard ISO 1183. Glass transition temperature may be 78°C, when measured according to standard ISO 11357-1, -2,-3 with heating rate of 10°C/min.

In an example, an amount of COC₁ is between 44 and 77 wt.%, between 50 and 77 wt.%, or between 65 and 75 wt.%. In an example, an amount of COC₂ is between 10 and 44 wt.%, between 15 and 35 wt.%, or between 15 and 25 wt.%. For example, a ratio of the first cyclic olefin copolymer to the second cyclic olefin copolymer COC₁/COC₂ is between 1 and 8, between 2 and 6, or between 3 and 5. For example, an amount of first cyclic copolymer is between 40 and 80 wt.% and an amount of second cyclic olefin copolymer is between 8 and 35 wt.%.

In an example, at least one skin layer comprises equal amounts of the first cyclic olefin copolymer and the second cyclic olefin copolymer.

The first and second cyclic olefin copolymers according to embodiments may have effect on the shrinking behaviour of the film. For example, a specific shrinkage curve may be achieved with the at least some/all embodiments.

In addition to cyclic polymer(s), the skin layer(s) may comprise acyclic olefin polymer(s), such as polyethylene (PE). Polyethylene may be at least one of the following: low density polyethylene (LDPE), medium density polyethylene (MDPE), and linear low density polyethylene (LLDPE). Polyethylene may be a copolymer of ethylene and 1-octene or a copolymer of ethylene and hexene. Polyethylene(s) may be Ziegler-Natta catalysed. Alternatively they may be metallocene-catalysed. Density of polyethylene may be between 0.91 and 0.94 g/cm³, preferably around 0.915-0.925 g/cm³, when measured according to standard ASTM D792. Melt Index may be between 0.5 and 25 g/10min, preferably between 1 and 10 g/10min, and most preferably between 1 and 6 g/10min, when measured at 190°C/2.16 kg according to standard ISO 1133.

In an example, skin layer(s) comprise linear low density polyethylene (LLDPE). LLDPE may be Ziegler-Natta catalyst based. For example, LLDPE may be a copolymer of ethylene and 1-octene. Density of LLDPE may be 0.916 g/cm³, when measured according to standard ASTM D792. Melt Index may be 2.0 g/10min, when measured according to standard ASTM D1238 at 190°C/2.16 kg. Alternatively, metallocene-catalysed LLDPE may be used. For example, ethylene-hexene copolymer. Density of metallocene-catalysed LLDPE may be 0.918 g/cm³ and melt index 2.0g/10 min, when measured according to standard ASTM D1238 at 190°C/2.16 kg.

In an example, LLDPE has density 0.935 g/cm³, when measured according to standard ASTM D1505. Melt index may be 2.6 g/10 min, when measured at 190°C/2.16 kg according to standard ASTM D1238.

In an example, LLDPE has density 0.917 g/cm³, when measured according to standard ASTM D792. Melt index may be 2.3 g/10 min, when measured at 190°C/2.16 kg according to standard ISO 1133.

In an example, polyethylene has density 0.916 g/cm³, when measured according to standard ASTM D792. Melt index may be 4 g/10 min, when measured at 190°C/2.16 kg according to standard ISO 1133.

In an example, LLDPE is a copolymer of an ethylene and 1-octene having density 0.916 g/cm³, when measured according to standard ASTM D792. Melt index may be 2.0 g/10 min, when measured at 190°C/2.16 kg according to standard ISO 1133.

In an example, metallocene based LLDPE with hexene as comonomer has density 0.917 g/cm³, when measured according to standard ISO 1183. Melt index (melt flow rate) may be 1.0 g/10 min, when measured at 190°C/2.16 kg according to standard ISO 1133.

In an example, metallocene based polyethylene with hexene as comonomer has density 0.934 g/cm³, when measured according to standard ISO 1183. Melt index (melt flow rate) may be 3.1 g/10 min, when measured at 190°C/2.16 kg according to standard ISO 1133.

In an example, polyethylene is metallocene catalysed ethylene-hexene copolymer having density 0.918 g/cm³, when measured according to standard ISO 1183. Melt index (melt flow rate) may be 2.0 g/10 min, when measured at 190°C/2.16 kg according to standard ISO 1133. Alternatively, melt index may be 2.0 g/10min, when measured according to standard ASTM D1238 at 190°C/2.16 kg. Alternatively, melt index may be 3.5 g/10min, when measured according to standard ASTM D1238 at 190°C/2.16 kg.

According to an embodiment, skin layer(s) comprise metallocene based low density polyethylene (LDPE) with hexene as comonomer. In an example, metallocene based LDPE has density 0.918 g/cm³, when measured according to standard ISO 1183. Melt index (melt flow rate) may be 2.0 g/10 min, when measured at 190°C/2.16 kg according to standard ISO 1133.

According to an embodiment, skin layer(s) comprise metallocene based medium density polyethylene (MDPE) with hexene as comonomer. In an example, MDPE has density 0.934 g/cm³, when measured according to standard ISO 1183. Melt index (melt flow rate) may be 0.9 g/10 min, when measured at 190°C/2.16 kg according to standard ISO 1133.

Total amount of polyethylene(s), including at least one of the following LDPE, LLDPE and MDPE, may be at most 30 wt.%, or at most 20 wt.%, or at most 10 wt.% of the total weight of the skin layer. As an example, minimum amount of polyethylene(s) may be 2, 5 or 10 wt.%. An amount of polyethylene(s) may be between 2 and 30 wt.%, between 5 and 20 wt.%, between 5 and 10 wt.%, or between 10 and 20 wt.%.

For example, an amount of linear low density polyethylene may be at most 30 wt.%, or at most 20 wt.%, or at most 10 wt.% of the total weight of the skin layer. As an example, minimum amount of LLDPE may be 2, 5 or 10 wt.%. An amount of LLDPE may be between 2 and 30 wt.%, between 5 and 20 wt.%, between 5 and 10 wt.%, or between 10 and 20 wt.%.

LLDPE may have effect on visual appearance of the film. It may have effect on reducing and/or avoiding the finger marking tendency of the film. LLDPE may further have an effect on providing good interlayer attachment for multilayer films. Also MDPE and LDPE may have effect on reducing and/or avoiding the finger marking tendency of the film. They may also have effect on interlayer adhesion of the multilayer face film.

Further, skin layer(s) may contain additives, such as inorganic fillers, pigments, antioxidants, ultraviolet absorbers, anti-blocking agents, slip additives, antistatic additives, cavitating agents. For example, the first skin layer may comprise anti-blocking agent. An amount of anti-blocking agent may be between 0.5 and 5 wt.%, preferably between 1 and 3 wt.% or between 2 and 3 wt. %.

### Core layer

### Ethylene-octene block copolymers

Ethylene-octene block copolymers may have density between 0.866 and 0.887 g/cm³, when measured according to ASTM D792. Melt index may be between 1 and 5 g/10 min, when measured according to ASTM D1238 (at 2.16 kg, 190 °C). DSC melting temperature may be between 119 and 122 °C.

In an example, ethylene-octene block copolymer may have density of 0.877 g/cm³, when measured according to ASTM D792. Melt index may be 5 g/10 min, when measured according to ASTM D1238 (at 2.16 kg, 190 °C). DSC melting temperature may be 122 °C.

In an example, ethylene-octene block copolymer may have density of 0.866 g/cm³, when measured according to ASTM D792. Melt index may be 1 g/10 min, when measured according to ASTM D1238 (at 2.16 kg, 190 °C). DSC melting temperature may be 121 °C.

In an example, ethylene-octene block copolymer may have density of 0.887 g/cm³, when measured according to ASTM D792. Melt index may be 5 g/10 min, when measured according to ASTM D1238 (at 2.16 kg, 190 °C). DSC melting temperature may be 119 °C.

In an example, ethylene-octene block copolymer may have density of 0.866 g/cm³, when measured according to ASTM D792. Melt index may be 5 g/10 min, when measured according to ASTM D1238 (at 2.16 kg, 190 °C). DSC melting temperature may be 119 °C.

### Ethylene-butene elastomers

Ethylene-butene elastomer(s) may have density between 0.862 and 0.880 g/cm³, when measured according to ASTM D792. Melt index may be between 0.8 and 5 g/10 min, when measured according to ASTM 1238 (at 2.16 kg, 190 °C). Mooney viscosity may be between 7 and 24 MU, when measured according to standard ASTM 1646 (ML 1+4 at 121 °C). Total crystallinity may be between 12 and 19%. DSC melting peak may be between 34 and 76 °C, when measured at heating rate of 10 °C/min. Glass transition temperature may be may be -58 and -42°C (DSC inflection point).

In an example, ethylene-butene elastomer may have density 0.862 g/cm³, when measured according to ASTM D792. Melt index may be 1.2 g/10 min, when measured according to ASTM 1238 (at 2.16 kg, 190 °C). Mooney viscosity may be 19 MU, when measured according to standard ASTM 1646 (ML 1+4 at 121 °C). Total crystallinity may be 12%. DSC melting peak may be 34 °C, when measured at heating rate of 10 °C/min. Glass transition temperature may be may be -58 °C (DSC inflection point).

In an example, ethylene-butene elastomer may have density 0.862 g/cm³, when measured according to ASTM D792. Melt index may be 3.6 g/10 min, when measured according to ASTM 1238 (at 2.16 kg, 190 °C). Mooney viscosity may be 9 MU, when measured according to standard ASTM 1646 (ML 1+4 at 121 °C). Total crystallinity may be 12%. DSC melting peak may be 40 °C, when measured at heating rate of 10 °C/min. Glass transition temperature may be may be -56 °C (DSC inflection point).

In an example, ethylene-butene elastomer may have density 0.865 g/cm³, when measured according to ASTM D792. Melt index may be 5 g/10 min, when measured according to ASTM 1238 (at 2.16 kg, 190 °C). Mooney viscosity may be 7 MU, when measured according to standard ASTM 1646 (ML 1+4 at 121 °C). Total crystallinity may be 13%. DSC melting peak may be 35 °C, when measured at heating rate of 10 °C/min. Glass transition temperature may be may be -53 °C (DSC inflection point).

In an example, ethylene-butene elastomer may have density 0.880 g/cm³, when measured according to ASTM D792. Melt index may be 0.8 g/10 min, when measured according to ASTM 1238 (at 2.16 kg, 190 °C). Mooney viscosity may be 24 MU, when measured according to standard ASTM 1646 (ML 1+4 at 121 °C). Total crystallinity may be 19%. DSC melting peak may be 64 °C, when measured at heating rate of 10 °C/min. Glass transition temperature may be may be -44 °C (DSC inflection point).

### Ethylene-octene elastomers

Ethylene-octene elastomer(s) may have density between 0.857 and 0.908 g/cm³, when measured according to ASTM D792. Melt index may be between 0.5 and 18 g/10 min, when measured according to ASTM 1238 (at 2.16 kg, 190 °C). Mooney viscosity may be between 3 and 33 MU, when measured according to standard ASTM 1646 (ML 1+4 at 121 °C). Total crystallinity may be between 13 and 34%. DSC melting peak may be 38 and 104 °C, when measured at heating rate of 10 °C/min. Glass transition temperature may be may be -58 and -31°C (DSC inflection point).

In an example, ethylene-octene elastomer may have density 0.857 g/cm³, when measured according to ASTM D792. Melt index may be 1g/10 min, when measured according to ASTM 1238 (at 2.16 kg, 190 °C). Mooney viscosity may be 25 MU, when measured according to standard ASTM 1646 (ML 1+4 at 121 °C). Total crystallinity may be 13%. DSC melting peak may be 38 °C, when measured at heating rate of 10 °C/min. Glass transition temperature may be may be -58 °C (DSC inflection point).

In an example, ethylene-octene elastomer may have density 0.863 g/cm³, when measured according to ASTM D792. Melt index may be 0.5 g/10 min, when measured according to ASTM 1238 (at 2.16 kg, 190 °C). Mooney viscosity may be 33 MU, when measured according to standard ASTM 1646 (ML 1+4 at 121 °C). Total crystallinity may be 16%. DSC melting peak may be 56 °C, when measured at heating rate of 10 °C/min. Glass transition temperature may be may be -55 °C (DSC inflection point).

In an example, ethylene-octene elastomer may have density 0.870 g/cm³, when measured according to ASTM D792. Melt index may be 5 g/10 min, when measured according to ASTM 1238 (at 2.16 kg, 190 °C). Mooney viscosity may be 8 MU, when measured according to standard ASTM 1646 (ML 1+4 at 121 °C). Total crystallinity may be 19%. DSC melting peak may be 59 °C, when measured at heating rate of 10 °C/min. Glass transition temperature may be may be -53 °C (DSC inflection point).

In an example, ethylene-octene elastomer may have density 0.880 g/cm³, when measured according to ASTM D792. Melt index may be 18 g/10 min, when measured according to ASTM 1238 (at 2.16 kg, 190 °C). Mooney viscosity may be 3 MU, when measured according to standard ASTM 1646 (ML 1+4 at 121 °C). Total crystallinity may be 24%. DSC melting peak may be 76 °C, when measured at heating rate of 10 °C/min. Glass transition temperature may be may be -50 °C (DSC inflection point).

### Olefin elastomers/plastomers

The modifier(s) of olefinic elastomers/plastomers may have density between 0.863 and 0.888 g/cm³, when measured according to standard ASTM D 792. Melt index may be between 1.1 and 9.1 g/10 min, when measured according to standard ASTM D 1238 at 190 degrees C/2.16 kg.

In an example, propylene-ethylene copolymer plastomer/elastomer comprises density between 0.863 and 0.888 g/cm³, when measured according to standard ASTM D 792. Melt flow rate may be between 2 and 8 dg/min, when measured according to standard ASTM D 1238 at 230 degrees C, 2.16 kg. Total crystallinity may be between 14 and 44%. Glass transition temperature may be between -33 and -17 degrees C.

In an example, olefinic elastomer is produced by using metallocene catalyst technology and the ethylene content being 11 wt.%. Density may be 0.873 g/cm³, when measured according to standard ASTM D1501. Melt flow rate may be between 8 g/10min. Melt index may be 3.6 g/10 min, when measured according to standard ASTM D 1238 at 190 degrees C, 2.16 kg.

In an example, olefinic elastomer comprises isotactic propylene repeat units with random ethylene distribution and the ethylene content being 11 wt.%. Density may be 0.874 g/cm³, when measured according to standard ASTM D1501. Melt flow rate may be between 3g/10min. Melt index may be 1.1 g/10 min, when measured according to standard ASTM D 1238 at 190 degrees C, 2.16 kg.

In an example, olefinic elastomer is produced by using metallocene catalyst technology and the ethylene content being 15 wt.%. Density may be 0.863 g/cm³, when measured according to standard ASTM D1501. Melt flow rate may be between 20 g/10min. Melt index may be 9.1 g/10 min, when measured according to standard ASTM D 1238 at 190 degrees C, 2.16 kg.

Modifiers, such as polyolefin elastomer(s) and/or polyolefin plastomer(s) may have a positive effect on the ability of the film to be stretched (oriented) and thus on the shrinkage potential of the film.

### A heterophasic propylene-ethylene copolymers

A heterophasic propylene-ethylene copolymer(s) may be used in a core layer. Heterophasic propylene-ethylene copolymer(s) may have melt flow rate MFR (at 230 °C/2.16 kg) between 0.6 and 27 g/10 min, when measured according to ISO 1133. Density may be between 880 and 905 kg/m³. Melting temperature may be between 140 and 170 °C, when measured according to standard ISO 11357-3.

In an example, heterophasic propylene-ethylene copolymer may have melt flow rate MFR (at 230 °C/2.16 kg) of 0.8 g/10 min, when measured according to ISO 1133. Density may be of 905 kg/m³. A XS content may be of 28 wt.%, referring to xylene soluble species in the propylene copolymer. Ethylene content may be 15.5 wt.%. Melting temperature may be 140 °C, when measured according to standard ISO 11357-3.

In an example, heterophasic propylene-ethylene copolymer may have melt flow rate MFR (at 230 °C/2.16 kg) of 0.85 g/10 min, when measured according to ISO 1133. Melting temperature may be 166 °C, when measured according to standard ISO 3146.

In an example, heterophasic propylene-ethylene copolymer may have melt flow rate MFR (at 230 °C/2.16 kg) of 3.0 g/10 min, when measured according to ISO 1133. Melting temperature may be 168 °C, when measured according to standard ISO 11357-3.

Preferably the heterophasic propylene-ethylene copolymers presented in the following may be used for the core layer:
In an example heterophasic propylene-ethylene copolymer may have density of 0.88 g/cm³, when measured according to standard ISO 1183. Melt flow rate MFR (at 230 °C/2.16 kg) may be 0.6 g/10 min, when measured according to ISO 1133. Melting temperature may be 140 °C, when measured according to standard ISO 11357-3. Vicat softening temperature may be 60 °C, when measured according to standard ISO 306 (A50 (50 °C/h 10N)).

In an example heterophasic propylene-ethylene copolymer may have melt flow rate MFR (at 230 °C/2.16 kg) may be 27 g/10 min, when measured according to ISO 1133. Vicat softening temperature may be 72.8 °C, when measured according to standard ISO 306 (A50 (50 °C/h 10N)).

In an example heterophasic propylene-ethylene copolymer may have density of 0.89 g/cm³, when measured according to standard ISO 1183. Melt flow rate MFR (at 230 °C/2.16 kg) may be 7.5 g/10 min, when measured according to ISO 1133. Vicat softening temperature may be 94 °C, when measured according to standard ISO 306 (A50 (50 °C/h 10N)).

In an example heterophasic propylene-ethylene copolymer may have density of 0.89 g/cm³, when measured according to standard ISO 1183. Melt flow rate MFR (at 230 °C/2.16 kg) may be 9.5 g/10 min, when measured according to ISO 1133. Melting temperature may be 147 °C, when measured according to standard ISO 11357-3. Vicat softening temperature may be 112 °C, when measured according to standard ISO 306 (A50 (50 °C/h 10N)).

In an example heterophasic propylene-ethylene copolymer may have density of 0.89 g/cm³, when measured according to standard ISO 1183. Melt flow rate MFR (at 230 °C/2.16 kg) may be 6 g/10 min, when measured according to ISO 1133. Vicat softening temperature may be 89 °C, when measured according to standard ISO 306 (A50 (50 °C/h 10N)).

### Polybutene-ethylene copolymers

Polybutene-ethylene copolymer(s) may be used in a core layer. Polybutene-ethylene copolymer(s) may have melt flow rate MFR (at 190 °C/2.16 kg) between 2.5 and 4 g/10 min, when measured according to standard ISO 1133. Density may be between 0.897 and 0.911 g/cm³ at 20 °C, when measured according to standard ISO 1183. Melting temperature may be between 81 and 97 °C.

In an example, polybutene-ethylene copolymer may be a random copolymer of butene-1 with low ethylene content. It may have melt flow rate MFR (at 190 °C/2.16 kg) of 4 g/10 min. Density may be of 0.911 kg/m³. Melting temperature may be 97 °C.

In an example, polybutene-ethylene copolymer may be a random copolymer of butene-1 with high ethylene content. It may have melt flow rate MFR (at 190 °C/2.16 kg) of 3.5 g/10 min. Density may be of 0.897 kg/m³. Melting temperature may be 81 °C.

In an example, polybutene-ethylene copolymer may be a random copolymer of butene-1 with medium ethylene content. It may have melt flow rate MFR (at 190 °C/2.16 kg) of 2.5 g/10 min. Density may be of 0.901 kg/m³. Melting temperature may be 85 °C.

The core layer 5 contains propylene random copolymer (also referred to as random copolymer of propylene). Propylene random copolymer may be propylene-ethylene copolymer or propylene-butylene copolymer.

In an example, random copolymer of propylene with ethene may have density of 0.9 g/cm³, when measured according to standard ISO 1183. Melt flow rate MFR (at 230 °C/2.16 kg) may be 1.7 g/10 min, when measured according to ISO 1133.

In an example, random copolymer of propylene with ethene may have density of 0.9 g/cm³, when measured according to standard ISO 1183. Melt flow rate MFR (at 230 °C/2.16 kg) may be 2.2 g/10 min, when measured according to ISO 1133. Vicat softening temperature may be 122 °C, when measured according to standard ISO 306 (A50 (50 °C/h 10N)).

An amount of propylene random copolymer(s) is between 50 and 80 wt.%. For example 50, 55, 60, 65, 70, 75 or 80 wt.%.

The core layer further comprises at least one of the following: propylene/ethylene plastomer, ethylene/octene elastomer, and ethylene-butene elastomer. Total amount of propylene/ethylene plastomer, ethylene/octene elastomer, ethylene-butene elastomer or any combination thereof is between 20 and 50 wt.%. Examples of modifier(s) are presented above.

In a reference example, the core layer comprises random copolymer of propylene and olefin block copolymer. The olefin block copolymer may be block copolymer of ethylene and octene. An amount of propylene random copolymer(s) may be between 20 and 98 wt.%, or between 40 and 90 wt.%, or between 50 and 80 wt.%. For example 50, 55, 60, 65, 70, 75 or 80 wt.%. An amount of olefin block copolymer may be between 2 and 50 wt.%, preferably between 5 and 40 wt.%, and more preferably between 10 and 40 wt.%. The core layer may comprise for example, total amount of 10, 15, 20, 25, 30, or 40 wt.% olefin block copolymer.

According to the present invention, the core layer 5 contains propylene random copolymer between 50 and 80 wt.%. For example 50, 55, 60, 65, 70, 75 or 80 wt.%. Further, the core layer includes polyolefin elastomer and/or polyolefin plastomer, according to claim 1. Polyolefin plastomers/elastomers may be propylene-ethylene copolymers produced with a special catalyst and technology. A plastomer is a polymer that softens when heated. It hardens when cooled, but remains flexible. An elastomer is elastic polymer resembling natural rubber, returning to its original shape after being stretched or compressed. Propylene plastomers and propylene elastomers have narrow molecular weight distribution (MWD), broad crystallinity distribution and wide melt range. The intermediate layer includes at least one of the following: propylene/ethylene plastomer, ethylene/octene elastomer, and ethylene-butene elastomer. An amount of polyolefin plastomer and/or polyolefin elastomer is between 20 and 50 wt.%. The intermediate layer may comprise, for example, total amount of 20, 25, 30 or 40 wt.% of polyolefin elastomer and/or polyolefin plastomer.

Polyolefin elastomer(s) and/or polyolefin plastomer(s) may have a positive effect on the ability of the film to be stretched (oriented) and thus on the shrinkage potential of the film.

### MANUFACTURING HEAT SHRINK FACE FILMS AND LABELS

### Manufacturing a face film

Non-oriented multilayer face films may be manufactured by using either a cast or blown-film extrusion process. A shrinkable multilayer face film may be obtained by stretching (drawing) the extruded multilayer face film to an extent several times its original dimension to orient the film. Stretching may be designated also as orienting. Extruded film may be stretched uniaxially in transverse direction (across the film) TD. Alternatively, the film may be stretched uniaxially in machine direction (lengthwise) MD. During stretching the randomly oriented polymer chains of the extruded films are oriented in the direction of stretching (drawing). Orientation under uniaxial stress provides orientation of polymer chains of the plastic film in the direction of stress provided. In other words, the polymer chains are oriented at least partially in the direction of stretching (drawing). In this application, machine direction (MD) refers to the running direction (Sₓ) of the film during manufacturing, as shown for example in Fig. 3. The degree of orientation of the polymer chains depends on the drawing ratio of the film. In other words, the polymer chains in the film stretched with a higher draw ratio are more oriented when compared to the films stretched with lower draw ratio. The orientation, like orientation direction, amount and ratio, may have effect on properties of the film, and/or the label comprising the film. The stretching of the film and orientation of the polymer chains may be observed microscopically. Further, the orientation is detectable e.g. from the mechanical properties of the films, such as values of modulus and/or tensile strength.

The stretching in TD may be performed by heating the continuous film web and stretching it in transverse direction on a tenter frame. The stretching in MD may be performed by draw rolls with gradually increasing speed.

The stretching may be performed below the melting temperature (Tₘ) of the polymer and/or at or near the glass transition temperature (T_{g}) of the polymer. Preferably the film stretching temperature is between 50 and 130°C. After stretching, the film may be cooled with one or more cooling rolls having decreasing temperature profile starting at or just below stretching temperature and decreasing gradually to around room temperature. Stretching and subsequent cooling may provide suitable shrink potential for the film. Due to the shrink potential, the oriented films are able to shrink under elevated temperature towards the non-oriented (initial) state of the film.

The film may be uniaxially oriented approximately from 2 to 10 times, preferably 3 to 9 times, and most preferably from 3 to 8 times. The film may be uniaxially oriented in machine direction. Draw ratio (or orientation ratio) of the MD film is from 2 to 10 (from 2:1 to 10:1) , preferably from 3 to 9 (from 3:1 to 9:1), most preferably from 3 to 8 (from 3:1 to 8:1), correspondingly. Alternatively, the film may be uniaxially oriented in transverse direction, for example, from 2 to 10 times, preferably 3 to 9 times, and most preferably from 3 to 8 times.

For example, the films may be oriented at least 3 times at least in one direction, i.e. the draw ratio (stretching ratio) of the film is at least 3 in one direction of the film. Alternatively, the orientation ratio at least in one direction may be at least 4. For example, the draw ratio may be between 3 and 7, preferably between 4 and 6.

After the stretching the film is not heat set, i.e. not annealed, to provide maximum shrinkage for the multilayer shrink film. After stretching at elevated temperature the oriented film is immediately cooled by passing the film through cooling rolls. Cooling of the film may be gradual. After stretching, the film may be cooled with one or more cooling rolls having decreasing temperature profile starting at or just below stretching temperature and decreasing gradually to around room temperature. Consequently, subsequent application of heat causes the oriented film to relax and the oriented film may return towards or substantially back to its original unstretched dimensions. Thus, machine direction oriented films primarily shrink in the machine direction and transverse oriented films in the transverse direction.

The uniaxially stretched and subsequently cooled films are referred to non-annealed films having shrinkage potential and ability to shrink when external energy is provided to the film. In other words, non-annealed film refers to a film which is not relaxed to become temperature stable. Non-annealed film has shrinkage potential, when e.g. temperature exceeds a certain limit.

A face film oriented uniaxially in a machine direction (MD) provides controlled shrinkage of the film in the MD direction during subsequent shrinking process. A face film oriented uniaxially in transverse direction (TD) provides controlled shrinkage of the film in the transverse direction during subsequent shrinking process.

Machine direction (MD) oriented face films may be used for roll-fed labelling, i.e. in a labelling process where the label film is supplied from a reel, cut into separate labels, after which labels are mounted around an item and seamed during labelling step using adhesive, such as UV-acrylic hot-melt adhesive or other type of hot-melt adhesives e.g. based on block copolymers. Alternatively seam may be formed by solvent seaming, hot-bar (heat-sealing), laser-welding or ultrasonic radiation. During mounting the label around an item some adhesive may be used between the label and the surface of the item in order to keep the label in specified place. The label around the item may be shrunk in order to form a tight attachment and/or to conform the shape of the item.

Transverse direction (TD) oriented face films may be may be used for shrink-sleeve type of labels, which films are seamed into a form of a tube prior to labelling. The tube is cut into tubes of predetermined lengths and supplied as in a form of tube around an item. The labelled item may be heated in order to provide shrinking of the film around the item and/or to provide tight fitting of the label around the item and/or to conform the shape of the item with the label.

Referring to Fig. 4, not heat set (non-annealed), uniaxially oriented face film 1 having dimensions of length L1, width w1 and thickness d1, is arranged to shrink under application of heat so as to form a shrunk face film 6. Uniaxial orientation direction Sₓ, of the film is parallel to the film length L1 and L2. Uniaxial orientation direction may be, for example, machine direction MD. Alternatively, uniaxial direction may be transverse direction TD. The corresponding film dimensions are length L2, width w2 and thickness d2 after shrinking. Under heating the uniaxially oriented film 1 is capable of shrinking in the direction of the orientation Sₓ. In other words, the length of the film reduces, when heating is applied, i.e. L1>L2. If the film is oriented only in one direction Sₓ, in the perpendicular direction S_{y}, the dimension w1 is substantially equal to w2 after heat treatment. Same applies to the labels comprising uniaxially oriented face film.

The oriented, non-annealed multilayer face films, i.e. shrink films may be printed in order to provide visual effect and/or to display information. Printing may be performed by using traditional printing processes, for example, flexographic, gravure offset, and digital printing methods, such as liquid-toner, dry-toner or ink-jet processes. The multilayer shrink film may comprise printing on an outer surface of a first skin layer 3. Alternatively the reverse side of the multilayer film may be printed, i.e. a third layer 7 may comprise the printing. Thus the graphic patterns may be printed on at least one of the skin layers of the multi-layered film. When printing the second skin layer 7 of the film, the film may be referred to as reverse-printed. During labelling the reverse-printed film the printing is in direct contact with a surface of an item to which the film is applied. The print is viewed through the multilayer film. With these kind of films no further layers are needed to protect the printing e.g. from abrasion or scratching during handling of the labelled items.

In an example, initially clear face film of a label may be printed on the reverse side of the face film and the printing is visible through the face film. Thus, the printing is adjacent to the surface of the labelled item and as such protected, for example, from scuffing. The printing may be multi-layered comprising two or more printing layers. For example, colour printing at the film surface may be covered (overprinted) with a white or some other colour printing. Thus, the overprinting is next to the surface of the item. Through this kind of label the object beneath is not visible.

The face film may also be treated after printing. Such treatment may include, for example, over-varnishing or other coating methods to provide protection to the printing and/or adding other enhanced visual effects in addition to the information print.

### Labelling

The above presented face films are suitable for hint shrink labels and use for labelling of items. The films and labels produced thereof are suitable for labelling of a wide range of product designs and particularly suitable for highly contoured containers and products comprising curved sections, recesses and/or protrusions at the outer surface. The labels comprising heat shrink multilayer face film are suitable for items of glass, plastic, ceramics, glass, and metal. Shrinkage properties of films and/or labels enable labels to be used in highly contoured containers. The item may comprise or consists of polyethylene terephthalate (PET). The item may have a shape of a bottle. The films of the invention may also be used for labelling of batteries. The films may also be used as a face stock of a label laminate further comprising an adhesive layer and a release liner. For example, film according to the some or/all embodiments may be used for a face stock of a wash-off labels. Wash-off labels may be used e.g. for labelling of glass bottles. Due to the shrinking capability of the film, the labels may be efficiently detached and removed (washed-off) from the surface labelled during subsequent washing process.

Roll-fed shrink labels (RFS labels) may be applied to an item with a combination of steps including: rolling over, seaming and shrink technique. Labels may be provided in a roll of continuous label stock and cut into individual labels. Referring to Fig. 5, a label 2 cut from a continuous label stock and comprising or consisting of a multilayer plastic film is mounted around the outer surface of an item 8. Preferably, orientation direction Sₓ of the label film extends circumferentially around the item 8 in direction DIR1. Thus it is possible to provide 360°C decoration for the item. Main shrinking direction of the film is indicated by the Sx corresponding to direction DIR1, as shown in Fig. 5. Sₓ may correspond to the orientation direction of the film, for example machine direction MD.

Referring to Fig. 5, the opposite edges of the label 2, namely a leading edge 9 and a trailing edge 11, may overlap and form a seam 10. The seam 10 may comprise an adhesive layer, such as a hot melt or UV-curable adhesive. Alternatively, it may comprise solvent dissolving the film materials and thus provide a joint. The adhesive may be provided as a continuous strip or separate adhesive patterns. Alternatively, the seaming may be performed using other methods such as laser welding, heat sealing, or ultrasonic bonding. The item 8 having a label 2 wrapped around it is subsequently heated. The heating causes the label to shrink and to conform to the surface of the item. A shrunk, tight fitting label 4 for the item 8 is shown in Fig. 6. The shrunk label 4 provides a smooth and consistent coating for the item. The heating temperature of the label 2 may be between 80 and 150 °C, preferably between 120 and 130°C in hot-air tunnels or between 80 and 90°C in steam tunnels. Labels comprising oriented films in this embodiment shrink in the machine direction (Sx), The machine direction is extending circumferentially around the item (DIR1). The heat that induces shrinkage may be provided by conventional heat sources, such as hot steam, heated air, infrared radiation, or any other suitable heat source.

The item to be labelled may be highly contoured container, such as shampoo or detergent bottle, or drink container having e.g. recesses and/or protrusions at the outer surface. Thus, for example, a diameter of the bottle may alternate. A container may comprise different diameters. Difference between the diameters to be labelled in a container may be up to 30 %, or up to 20 %, or 2-30 %, or 5-20 %, or 8-15 %. According to an example, the difference between the smallest diameter and the largest diameter of the item to be labelled may be up to 30 %, or up to 40 %, or up to 50 %, or up to 60 %, or up to 70 %, or 2-70 %, or 5-60%, or 10-35%. The item may also be recyclable.

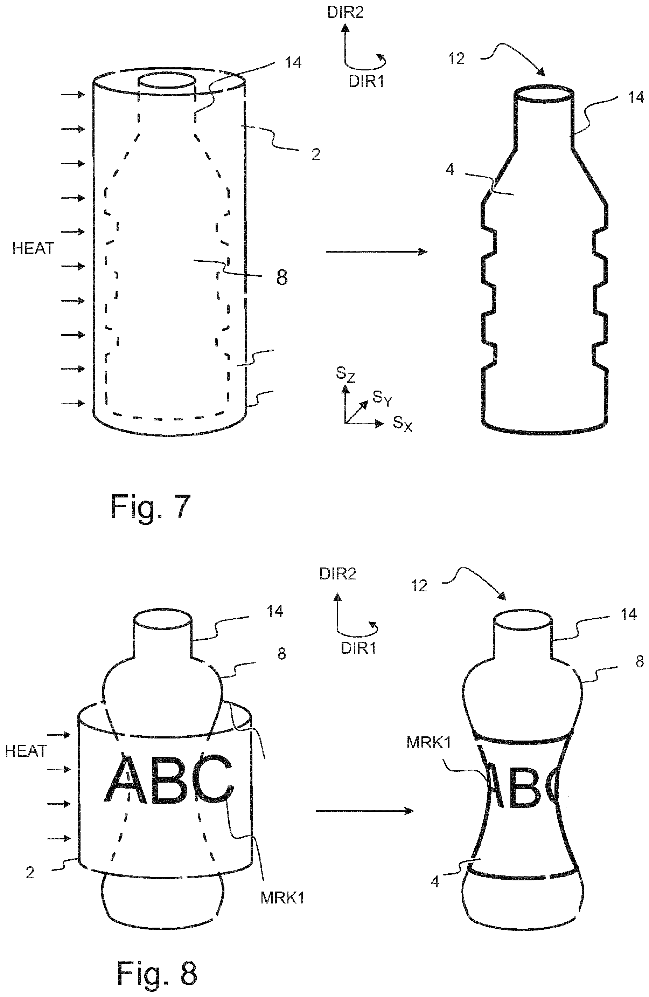

The label may be a full body label, i.e. the shrunk label 4 may cover substantially the whole outer surface of the item 8, as shown in Fig. 7. Alternatively, the label may cover the item 8 only partially, as shown in Fig. 6 and Fig. 8. Referring to Fig. 8, for example a neck of a bottle 14 may be left without a label, or a separate and/or different label may be used for the bottle neck part than for the bottle volume part.

According to an embodiment and with reference to Fig. 9, the label may consists of a face film having transversal orientation direction (TD). Prior to labelling, transverse oriented films may be solvent seamed into a form of a continuous tube i.e. a continuous shrink sleeve label 22. The continuous tube is then cut into shorter, predetermined lengths and supplied as a separate tube around an item. The labelled item is transferred to the following process step of heating so as to provide shrinking of the label around the item.

### PROPERTIES

A face film according to at least some/all embodiments and a label comprising the shrink film has effect on providing good shrinkage at steam-tunnel operating temperatures.

A face film according to at least some/all embodiments and a label comprising the shrink film has effect on providing improved stiffness.

A face film according to at least some/all embodiments and a label comprising the shrink film has effect on providing more economical labels.

A face film according to at least some/all embodiments and label comprising said film have controlled shrinkage, i.e. specific amount of shrinkage at specific temperature range. The films have an ability to shrink upon exposure to external energy, e.g. some level of heat. Shrinkage of the film is activated when the film is treated e.g. at elevated temperatures, such as passed through a hot air or steam-tunnel. The shrink performance, i.e. shrinking capacity (potential) of the films in the stretching direction is very high at elevated temperatures. Preferably, overall shrinkage may be over 50% at temperature range from 65 to 90 °C or from 70 to 85°C.

Shrinkage may be measured according to the following method: providing a sample with measured and marked 100 mm*100 mm area, placing the sample for 15 seconds to the water baths having temperatures at intervals of 5°C from 55 °C to 98 °C, cooling the sample at water bath having temperature of around room temperature, drying the sample and measuring the dimensions of the marked area of the sample. Preferably at least 3 or more parallel samples are used. Shrinkage is determined as the relative change of dimensions. The term "shrinkage" is defined with reference to the method; however, it is evident, and has been noticed, that the same shrinkage properties apply regardless of the method, provided that the same temperatures are used. I.e. the composition of heat transfer medium (air, steam, water) is not critical for shrinkage behaviour.

According to an embodiment, shrinkage of the multilayer face films of the invention at temperatures between 80 and 150 °C, preferably between 80 and 110°C, more preferably between 80 and 90 °C may be more than 20% in the orientation direction of the film. Preferably, shrinkage may be between 20 and 40%, or between 40 and 60%, or more than 60%, for example at least 70% in the direction of the orientation of the film. Referring to Fig. 4, the orientation direction may be parallel to Sₓ. The shrinkage may be between 20 and 90%, preferably between 25 to 80%, and most preferably between 30 and 75% under normal shrink film and label shrinking temperatures between 80 and 150 °C, preferably between 80 and 130°C, more preferably between 80 and 110 °C, more preferably between 80 and 90 °C in a steam-tunnel. In other than orientation direction, the films may have shrinkage less than 10%, preferably less than 7%, most preferably less than 5%, for example between 0 and 5% or between 2 and 4%. Referring to Fig. 4, the other than orientation direction may be direction parallel to S_{y}. The shrink performance of the multilayer films is adequate in order to conform the film to the profile of the substrate, which is to be labelled.

A face film according to at least some/all embodiments and a label comprising the face film is able to shrink in the direction of the orientation of the face film between 20 and 75% at a temperature range between 65 and 85°C. Preferably, the face film and a label comprising the face film is able to shrink between 25 and 65% at a temperature range between 65 and 85°C. For example, the face film and a label comprising the face film is able to shrink between 25 and 55%, or preferably between 30 and 40% at a temperature range between 65 and 85°C. According to another example, the face film and a label comprising the face film is able to shrink between 35 and 65%, or preferably between 40 and 60% at a temperature range between 65 and 85°C. At temperature below 65°C the face film and the label comprising the face film shrinks preferably less than 10%. The specific shrinkage profile of the face film and the label comprising the face film has an effect of on providing more controlled shrinkage behaviour for the film at a specific temperature. For example, specific shrinking curves of some/all embodiments may have an effect on more accurate shrinkage to be achieved even if some variation occurs during thermal treatment (shrinking process).

According to an embodiment, the multilayer face film is clear i.e. transparent to visible light. Clear multilayer shrink films and labels comprising said films have good visual appearance. For example, said films may provide no-label look or appearance, when attached to the surface of an item. The clear no-label look allows the objects beneath such label, i.e. the bottle or contents, to be visible through such label. Clarity of the film and a label comprising said film can be measured and evaluated by the haze values. The overall haze of the multilayer film and label consisting of said multilayer film may be less than 25%, preferably less than 15%, and most preferably less than 10% when measured according to the standard ASTM D1003. For example, the haze of the face film may be between 2 and 10%, or between 5 and 10%.

A face film according to at least some/all embodiments and label comprising said film is suitable for printing. Preferably the films enable high printing quality. The films have excellent ink adhesion and register control, allowing for example gravure printing. According to an embodiment, the face film surface may be treated prior to printing. The print receiving surface may be treated by flame treatment, corona treatment, or plasma treatment in order to increase the surface tension of the surface and to enhance, for example, adhesion of the printed graphics. A low surface tension may lead to poor retaining capability of printing ink applied to the surface. Surface tension of the print receiving skin layer may be higher than or equal to 38 mN/m, for example 44 mN/m, when measured according to standard ISO 8296. For example, the print receiving skin layer may have a surface tension at least 36 dynes/cm, preferably at least 38 dynes/cm or at least 44 dynes/cm measured according to the standard ASTM D-2578. The surface tension may be between 36 and 60 dynes/cm, preferably between 38 and 56 dynes/cm or between 44 and 50 dynes/cm.

The drawings are schematic. The particular embodiments described above with reference to the accompanying drawings are illustrative only and not meant to limit the scope of the invention, which is defined by the appended claims.

## Claims

1. A multilayer face film for a label capable to shrink under exposure to external energy, the multilayer face film comprising layers in the following order: a first skin layer, a core layer, a second skin layer, wherein the core layer comprises:
between 50 and 80 wt.% of propylene random copolymer(s); and
between 20 and 50 wt.% propylene-ethylene plastomer, ethylene-octene elastomer, ethylene-butene elastomer or any combination thereof,
and wherein the first skin layer and the second skin layer comprise at least 80 wt.% of cyclic polymers, the cyclic polymers including a first cyclic olefin copolymer and a second cyclic olefin copolymer exhibiting different glass transition temperatures between 30 and 100 °C, and a difference between the glass transition temperature of the first cyclic olefin copolymer and the glass transition temperature of the second cyclic olefin copolymer being between 5 and 60 °C.

2. A multilayer face film according to claim 1, wherein the first cyclic olefin copolymer exhibits the glass transition temperature below 70°C and wherein the second cyclic olefin copolymer exhibits the glass transition temperature above 70°C.

3. A multilayer face film according to any of the previous claims, wherein the multilayer face film is stretched in one direction with a ratio of unstretched film thickness to stretched film thickness between 2 and 10.

4. A multilayer face film according to claim 3, wherein the multilayer face film stretched in the one direction exhibits uniaxial stretching in a machine direction.

5. A label capable to shrink under exposure to external energy comprising a multilayer face film according to any of the claims 1-4.

6. Use of a label capable to shrink under exposure to external energy according to claim 5 for labelling of an item.

7. A combination of a label capable to shrink under exposure to external energy and an item, wherein the label comprises a multilayer face film according to any of the claims **1-4** and wherein the label is shrunk around the item.

8. A method for labelling of an item, wherein a label comprises a multilayer face film comprising layers in the following order: a first skin layer, a core layer, a second skin layer, wherein the core layer comprises:
between 50 and 80 wt.% of propylene random copolymer(s); and
between 20 and 50 wt.% propylene-ethylene plastomer, ethylene-octene elastomer, ethylene-butene elastomer or any combination thereof, and wherein the first skin layer and the second skin layer comprise at least 80 wt.% of cyclic polymer(s), the cyclic polymer(s) including a first cyclic olefin copolymer and a second cyclic olefin copolymer exhibiting different glass transition temperatures between 30 and 100 °C, and a difference between the glass transition temperature of the first cyclic olefin copolymer and the glass transition temperature of the second cyclic olefin copolymer being between 5 and 60 °C,
the method comprising:
wrapping the label around the item, wherein the orientation direction of the multilayer face film is extending circumferentially around the item;
seaming the label by gluing, laser welding, heat sealing, or ultrasonic bonding;
heating the label at temperature between 80 and 90 °C in a steam-tunnel so as to form a tight fitting label for the item.

## Patentansprüche

1. Mehrschichtige Deckschicht für ein Etikett, die unter Einwirkung externer Energie schrumpfen kann, wobei die mehrschichtige Deckschicht Schichten in der folgenden Reihenfolge umfasst: eine erste Deckschicht, eine Kernschicht, eine zweite Deckschicht, wobei die Kernschicht Folgendes umfasst:
zwischen 50 und 80 Gew.-% eines oder mehrerer statistischer Propylencopolymere; und zwischen 20 und 50 Gew.-% Propylen-Ethylen-Plastomer, Ethylen-Octen-Elastomer, Ethylen-Buten-Elastomer oder eine beliebige Kombination davon,
und wobei die erste Hautschicht und die zweite Hautschicht mindestens 80 Gew.-% zyklische Polymere umfassen, wobei die zyklischen Polymere ein erstes zyklisches Olefincopolymer und ein zweites zyklisches Olefincopolymer umfassen, die unterschiedliche Glasübergangstemperaturen zwischen 30 und 100 °C aufweisen, und wobei eine Differenz zwischen der Glasübergangstemperatur des ersten zyklischen Olefincopolymers und der Glasübergangstemperatur des zweiten zyklischen Olefincopolymers zwischen 5 und 60 °C liegt.

2. Mehrschichtige Deckfolie nach Anspruch 1, wobei das erste zyklische Olefincopolymer die Glasübergangstemperatur unter 70 °C aufweist und wobei das zweite zyklische Olefincopolymer die Glasübergangstemperatur über 70 °C aufweist.

3. Mehrschichtige Deckfolie nach einem der vorstehenden Ansprüche, wobei die mehrschichtige Deckfolie in einer Richtung mit einem Verhältnis von ungestreckter Foliendicke zu gestreckter Foliendicke zwischen 2 und 10 gestreckt ist.

4. Mehrschichtige Deckfolie nach Anspruch 3, wobei die in der einen Richtung verstreckte mehrschichtige Deckfolie eine uniaxiale Verstreckung in einer Maschinenrichtung aufweist.

5. Etikett, das in der Lage ist, unter Einwirkung von äußerer Energie zu schrumpfen, und das eine mehrschichtige Deckfolie nach einem der Ansprüche 1 bis 4 umfasst.

6. Verwendung eines Etiketts, das unter Einwirkung von äußerer Energie schrumpfen kann, nach Anspruch 5 zur Etikettierung eines Gegenstandes.

7. Kombination aus einem Etikett, das in der Lage ist, unter Einwirkung von äußerer Energie zu schrumpfen, und einem Gegenstand, wobei das Etikett eine mehrschichtige Deckfolie nach einem der Ansprüche 1 bis 4 umfasst und wobei das Etikett um den Gegenstand herum geschrumpft wird.

8. Verfahren zum Etikettieren eines Gegenstandes, wobei ein Etikett eine mehrschichtige Deckfolie umfasst, die Schichten in der folgenden Reihenfolge umfasst: eine erste Hautschicht, eine Kernschicht, eine zweite Hautschicht, wobei die Kernschicht Folgendes umfasst:
zwischen 50 und 80 Gew.-% statistische(s) Propylencopolymer(e); und
zwischen 20 und 50 Gew.-% Propylen-Ethylen-Plastomer, Ethylen-Octen-Elastomer, Ethylen-Buten-Elastomer oder eine beliebige Kombination davon, wobei die erste Hautschicht und die zweite Hautschicht mindestens 80 Gew.% zyklische(s) Polymer(e) umfassen, wobei das (die) zyklische(n) Polymer(e) ein erstes zyklisches Olefincopolymer und ein zweites zyklisches Olefincopolymer einschließen, die unterschiedliche Glasübergangstemperaturen zwischen 30 und 100 °C aufweisen, und eine Differenz zwischen der Glasübergangstemperatur des ersten zyklischen Olefincopolymers und der Glasübergangstemperatur des zweiten zyklischen Olefincopolymers zwischen 5 und 60 °C liegt, das Verfahren umfassend:
Wickeln des Etiketts um den Gegenstand, wobei sich die Ausrichtungsrichtung der mehrschichtigen Deckfolie in Umfangsrichtung um den Gegenstand erstreckt;
Verschweißen des Etiketts durch Kleben, Laserschweißen, Heißsiegeln oder Ultraschallverschweißen;
Erhitzen des Etiketts bei einer Temperatur zwischen 80 und 90 °C in einem Dampftunnel, um ein eng anliegendes Etikett für den Gegenstand zu bilden.

## Revendications

1. Film de façade multicouche pour une étiquette capable de rétrécir sous exposition à une énergie externe, le film de façade multicouche comprenant des couches dans l'ordre suivant : une première couche superficielle, une couche centrale, une seconde couche superficielle, dans lequel la couche centrale comprend :
entre 50 et 80 % en poids de copolymère(s) statistique(s) de propylène ; et entre 20 et 50 % en poids de plastomère de propylène-éthylène, d'élastomère d'éthylène-octène, d'élastomère d'éthylène-butène ou d'une combinaison de ceux-ci,
et dans lequel la première couche superficielle et la seconde couche superficielle comprennent au moins 80 % en poids de polymères cycliques, les polymères cycliques comportant un premier copolymère d'oléfine cyclique et un second copolymère d'oléfine cyclique présentant des températures de transition vitreuse différentes comprises entre 30 et 100 °C, et une différence entre la température de transition vitreuse du premier copolymère d'oléfine cyclique et la température de transition vitreuse du second copolymère d'oléfine cyclique étant comprise entre 5 et 60 °C.

2. Film de façade multicouche selon la revendication 1, dans lequel le premier copolymère d'oléfine cyclique présente la température de transition vitreuse inférieure à 70 °C et dans lequel le second copolymère d'oléfine cyclique présente la température de transition vitreuse supérieure à 70 °C.

3. Film de façade multicouche selon l'une quelconque des revendications précédentes, dans lequel le film de façade multicouche est étiré dans un sens avec un rapport entre l'épaisseur du film non étiré et l'épaisseur du film étiré compris entre 2 et 10.

4. Film de façade multicouche selon la revendication 3, dans lequel le film de façade multicouche étiré dans un sens présente un étirement uniaxial dans un sens machine.

5. Étiquette capable de rétrécir sous exposition à une énergie externe comprenant un film de façade multicouche selon l'une quelconque des revendications 1 à 4.

6. Utilisation d'une étiquette capable de rétrécir sous exposition à une énergie externe selon la revendication 5 permettant l'étiquetage d'un article.

7. Combinaison d'une étiquette capable de rétrécir sous exposition à une énergie externe et d'un article, dans laquelle l'étiquette comprend un film de façade multicouche selon l'une quelconque des revendications 1 à 4 et dans laquelle l'étiquette est rétrécie autour de l'article.

8. Procédé permettant l'étiquetage d'un article, dans lequel une étiquette comprend un film de façade multicouche comprenant des couches dans l'ordre suivant : une première couche superficielle, une couche centrale, une seconde couche superficielle, dans lequel la couche centrale comprend :
entre 50 et 80 % en poids de copolymère(s) statistique(s) de propylène ; et
entre 20 et 50 % en poids de plastomère propylène-éthylène, d'élastomère d'éthylène-octène, d'élastomère d'éthylène-butène ou d'une combinaison de ceux-ci, et dans lequel la première couche superficielle et la seconde couche superficielle comprennent au moins 80 % en poids de polymère(s) cyclique(s), le ou les polymères cycliques comportant un premier copolymère d'oléfine cyclique et un second copolymère d'oléfine cyclique présentant des températures de transition vitreuse différentes comprises entre 30 et 100 °C, et une différence entre la température de transition vitreuse du premier copolymère d'oléfine cyclique et la température de transition vitreuse du second copolymère d'oléfine cyclique étant comprise entre 5 et 60 °C, le procédé comprenant :
l'enroulement de l'étiquette autour de l'article, dans lequel le sens d'orientation du film de façade multicouche s'étend circonférentiellement autour de l'article ;
la fixation de l'étiquette par collage, soudage au laser, thermoscellage ou soudage par ultrasons ;
le chauffage de l'étiquette à une température comprise entre 80 et 90 °C dans un tunnel à vapeur de manière à former une étiquette bien ajustée sur l'article.
